# EUROPÄISCHE PATENTSCHRIFT

(11) **EP 4 139 736 B1**
(45) Veröffentlichungstag und Bekanntmachung des Hinweises auf die Patenterteilung: **03.07.2024**
(21) Anmeldenummer: 21712497.3
(22) Anmeldetag: 17.03.2021
(51) Int. Cl.: G02B 27/00

(54) **VERFAHREN ZUR BERECHNUNG EINES OPTISCH RELEVANTEN KRAFTFAHRZEUGBAUTEILS MIT EINER LICHTSTREUENDEN OBERFLÄCHE**
METHOD FOR CALCULATING AN OPTICALLY RELEVANT MOTOR VEHICLE COMPONENT WITH A LIGHT-SCATTERING SURFACE
PROCÉDÉ DE CALCUL D'UN COMPOSANT DE VÉHICULE AUTOMOBILE VISUELLEMENT PERTINENT DOTÉ D'UNE SURFACE DIFFUSANT LA LUMIÈRE

(30) Priorität: 23.04.2020 EP 20171071
(43) Veröffentlichungstag der Anmeldung: 01.03.2023
(73) Patentinhaber: ZKW Group GmbH, 3250 Wieselburg (AT)
(72) Erfinder: KEMETMÜLLER, Matthias, 1220 Wien (AT)
(74) Vertreter: Patentanwaltskanzlei Matschnig & Forsthuber OG
(86) Internationale Anmeldenummer: PCT/EP2021/056848
(87) Internationale Veröffentlichungsnummer: WO 2021/213739

(56) Entgegenhaltungen:
- CHOI, MYONG JO: "Simulation of Backlight Using Bidirectional Scattering Distribution Function", SID SYMPOSIUM 2010, SEATTLE, USA, SID, CAMPBELL, CA, USA, 23. Mai 2010 (2010-05-23), XP001565076,
- ZHDANOV DMITRY D ET AL: "Efficient methods of BSDF reconstruction from the micro-relief dataset for the lighting simulation tasks", PROCEEDINGS OF SPIE; [PROCEEDINGS OF SPIE ISSN 0277-786X VOLUME 10524], SPIE, US, Bd. 10693, 28. Mai 2018 (2018-05-28), Seiten 1069310-1069310, XP060105575, DOI: 10.1117/12.2312637 ISBN: 978-1-5106-1533-5

## Beschreibung

Die Erfindung betrifft ein Verfahren zur Berechnung eines optisch relevanten Kraftfahrzeugbauteils mit einer lichtstreuenden Oberfläche.

Weiter wird ein nicht-beanspruchtes optisch relevantes Kraftfahrzeugbauteil hergestellt nach dem erfindungsgemäßen Verfahren vorgeschlagen.

Weiter wird ein nicht-beanspruchter Kraftfahrzeugscheinwerfer, umfassend das nicht-beanspruchte optisch relevante Kraftfahrzeugbauteil vorgeschlagen.

Weiter wird zudem ein nicht-beanspruchtes Kraftfahrzeug, umfassend das nicht-beanspruchte optisch relevante Kraftfahrzeugbauteil und/oder den nichtbeanspruchten Kraftfahrzeugscheinwerfer vorgeschlagen.

Aus dem Stand der Technik ist es bekannt, Oberflächen von optischen Strukturen zu narben um Verbesserungen von Lichtfunktionen bezüglich Homogenität, Streulicht, räumliche Sichtbarkeit, oder ähnlichem zu erzielen. Diese Narbungen sind üblicherweise komplett zufällig und nicht für lichttechnische Anwendungsgebiete optimiert. Die Narbungen sind in diesen Fällen lichttechnisch undefiniert. Daraus resultiert ein undefiniertes Streuverhalten. Als Resultat sind die dadurch entstehenden Lichtverteilungen sehr ineffizient, weil Licht ebenso in ungewünschte Bereiche gestreut wird. Soll hingegen eine gezieltes Streuverhalten erreicht werden, so wurden im Stand der Technik hierfür entsprechende regelmäßige Strukturen geschaffen, die zudem regemäßig angeordnet waren. Eine solcherart ausgebildete Oberfläche wirkt nicht mehr "unregelmäßig" und "diffus", sondern lässt sich mit freiem Auge als regelmäßig strukturierte Fläche erkennen.

Aus Zhdanov Dmitry D et al: "Efficient methods of BSDF reconstruction from the micro-relief dataset for the lighting Simulation tasks", PROCEEDINGS OF SPIE; [PROCEEDINGS OF SPIE ISSN 0277-786X VOLUME 105241, SPIE, US, Bd. 10693, 28. Mai 2018 (2018-05-28), Seiten 1069310-1069310 ist einen Zusammenhang zwischen Mikrostruktur einer optischen Oberfläche und der Bidirectional Scattering Distribution Function (BSDF) bekannt. Zudem ist aus diesem Dokument die Verwendung einer BSDF zur optischen Simulation bekannt.

Eine Aufgabe der Erfindung besteht darin, eine Möglichkeit zu schaffen, mit der das streuverhalten einer lichtstreuenden Oberfläche vorgegeben werden kann, und dennoch Mikrooptiken dergestalt angeordnet sind, der optische Eindruck einer diffusen Fläche entsteht.

Diese Aufgabe wird gemäß Anspruch 1 mit einem Verfahren der eingangs genannten Art gelöst, welches erfindungsgemäß die folgenden Schritte umfasst:
a) Auswahl einer vorgebbaren BSDF-Verteilung der lichtstreuenden Oberfläche des optischen relevanten Kraftfahrzeugbauteils, wobei die lichtstreuende Oberfläche aus lichtstreuenden Mikrooptikelementen zusammengesetzt ist,
b) Auswahl der Information, ob die lichtstreuende Oberfläche entweder ausschließlich reflektiv lichtstreuend wirkt, oder ob ein transmittierender Anteil vorhanden ist, wobei im Falle des Vorliegens eines transmittierenden Anteils zudem ein Schritt b1) folgt, wonach zur Berücksichtigung des Brechungsindex eine Auswahl eines Materials, aus dem die Oberfläche zusammengesetzt ist, erfolgt,
c) Auswahl eines den Größenbereich der Mikrooptikelemente vorgebenden Parameters aus einem vorgebbaren Wahlbereich,
d) Berechnen von unterschiedlichen Formen von Mikrooptikelementen und derer Mengenverteilung gemäß einem Algorithmus zur Erzielung der gemäß Schritt a) ausgewählten BSDF-Verteilung unter Berücksichtigung der ausgewählten Größenbereichs gemäß Schritt c) sowie gegebenenfalls der optischen Eigenschaften des Materials gemäß Schritt b1), wobei die Oberfläche gemäß Schritt a) aus einer Vielzahl an nebeneinander flächig angeordneten Mikrooptikelementen zusammengesetzt ist, die aus dem Material gemäß Schritt c) bestehen, wobei der Algorithmus folgende Teilschritte umfasst:
   d1) Heranziehen zumindest eines Teils der BSDF-Verteilung
   d2) Aufteilen der Verteilung nach Schritt d1) in winkelabhängige Teilbereiche,
   d3) Berechnen der geometrischen Form der Reflexions- oder Transmissionsflächen von Mikrooptikelementen für jeden Teilbereich (d.h. für jeden Teilbereich werden die hierfür erforderlichen geometrischen Formen der Mikrooptikelemente berechnet),
   d4) Bestimmen des mengenmäßigen Anteils der Mikrooptikelemente für jeden Teilbereich in Abhängigkeit von dem Wert der Verteilungsfunktion für den Teilbereich (d.h. es wird z.B. das Mengenverhältnis im Vergleich zu anderen Teilbereichen bestimmt),
   d5) randomisierte Verteilung der gemäß Schritt d4) bestimmten Mikrooptikelemente auf die Oberfläche des optisch relevanten Kraftfahrzeugbauteils,
e) Ausgabe des Berechnungsergebnisses gemäß Schritt d) in Form digitaler Daten.

Auf diese Weise können (z.B. narbungsähnliche) Oberflächenstrukturen erstellt werden, deren Streuverhalten von einem Lichttechniker vorgegeben werden kann, die aber in ihrem Aussehen keine regelmäßigen Muster oder Strukturen erkennen lassen. Das Streuverhalten kann des optisch relevanten Bauteils kann dabei gezielt vorgegeben und so hinsichtlich der gewünschten Anwendung optimiert werden. Die Abstrahlung von Fehllicht kann somit weitgehend vermieden werden.

Unter dem Ausdruck "optisch relevantes Kraftfahrzeugbauteil" wird ein optisch relevantes Bauteil verstanden, dass für die Anwendung in einem Kraftfahrzeug bestimmt ist. Unter dem Ausdruck "optisch relevantes Bauteil" wird ein Bauteil verstanden, das folgende Eigenschaften aufweist: Ein optisch relevantes Bauteil beeinflusst die Ausbreitung von Licht, das entweder durch das optisch relevante Bauteil selbst emittiert wird, oder auf dieses auftrifft, wobei das optisch relevante Bauteil mit diesem auftreffenden Licht wechselwirkt und in weiterer Folge Licht abstrahlt. Als ein optisch relevantes Bauteil wird beispielsweise eine Lichtquelle, insbesondere eine LED und/oder eine Laserlichtquelle, eine Blende oder Blendenanordnungen, ein Reflektor, eine Linse, insbesondere eine Projektionslinse, ein Lichtleiter, eine Dickwandoptik, ein Prisma, ein optisches Gitter, ein Spiegel, ein als DMD-Chip ausgebildetes MEMS-Bauteil, und/oder ein ganzes Lichtmodule bzw. Baugruppen umfassend solche Komponenten, etc. angesehen. Es können auch einzelne oder eine Mehrzahl dieser genannten Komponenten das optisch relevante Bauteil ausbilden. Das optisch relevante Bauteil kann beispielsweise in einem Tragrahmen gehaltert sein und/oder mit Hilfe eines Einstellsystems einstellbar sein, wobei das Einstellsystem hierzu beispielsweise an dem optisch relevanten Bauteil oder dem Tragrahmen angreifen kann.

BxDF Verteilungen sind höherdimensionale Tensoren, die als Transferfunktion zwischen Einfallendem Lichtstrahl und Ausfallendem Lichtstrahl interpretiert werden können. Die BxDF Funktionen bilden also jeden möglichen, einfallenden Lichtstrahl auf den Raumwinkel ab. Die BRDF Funktion auf den reflektierten Halbraum, die BTDF Funktion auf den Transmittierten Halbraum. Die BSDF Funktion kann eine Kombination aus BRDF und BTDF sein und somit den gesamten Raumwinkel umfassen. Eine BSDF Verteilung kann als eine Funktion auffasst, die für jeden auf eine Fläche auffallenden Lichtstrahl eine Verteilung ausgeben kann, die angibt wie groß die Wahrscheinlichkeit ist, dass dieser Lichtstrahl in eine gewisse Raumrichtung gestreut wird. Und da in der Praxis eine enorme Menge an Photonen auf die betreffende Fläche eintrifft, ist diese Streuwahrscheinlichkeit gleichbedeutend mit der gestreuten Lichtintensität, weil bei einer Lichtmessung das Gesetz der Großen zahlen immer erfüllt ist. Man bekommt also für jeden Einfallswinkel eine Lichtintensitätsverteilung. Die BSDF Verteilung setzt jeden möglichen, einfallenden Lichtstrahl mit allen möglichen Ausfallswinkeln in Relation. Sinnvoll visualisieren kann man aber immer nur einen Ausschnitt aus der BSDF - sprich ein Abstrahlungsverhalten für einen bestimmten Einfallswinkel.

Die randomisierte Verteilung gemäß dem Algorithmus nach Schritt d), insbesondere Schritt d5) kann beispielsweise in folgenden Teilschritten erfolgen:
1. Unterteilung der Gesamtfläche in kleinere Teilflächen,
2. Festlegen der gewünschten (Teil-)Winkelverteilung, Material, Transmission/Reflexion, etc. für eine Teilfläche,
3. Berechnung der korrespondierenden Winkelwerte und (Teil-)Winkelverhältnissen bzw. Gewichtungen (aus der BSDF et al. von 2.),
4. Initialisierung eines (Pseudo-)Zufallsgenerators mit der gewünschten Verteilung von Schritten 2. und 3. (berücksichtigt Winkelbereich und Gewichtungen)
5. Unterteilung der Teilfläche in kleinere Einzeloptik-Bereiche und Festlegung von repräsentativen Einzelbereichspunkten (="Gitterpunkte"),
6. Berechnung der Optiken an diesen Gitterpunkten nach folgenden Teilschritten:
   a. Auswahl eines Gitterpunktes (deterministisch oder zufällig möglich)
   b. Ziehen eines zufälligen Winkelwert-Samples für diesen Gitterpunkt (Zufallsgenerator)
   c. Berechnung einer Einzeloptik-Form für den ausgewählten Winkelwert
   d. Positionierung der Einzeloptik c. an dem Gitterpunkt a.
   e. Wiederholen von a.-d. bis allen ausgewählten Gitterpunkten eine Optik zugewiesen wurde
7. Wiederholen der Schritte 2. - 6. bis die Teilfläche mit Optiken besetzt ist oder die Teil-Winkelverteilung hinreichend genau abgebildet wird
8. Wiederholen von Schritten 1. - 7. bis die Gesamtfläche voll besetzt ist oder die gewünschte Zielverteilung hinreichend genau abgebildet wird.

Dadurch ist eine unter Heranziehung von Zufallskomponenten generierte Fläche mit gewünschtem Streuverhalten erhältlich.

Durch Wahl einer Maximalgröße der Mikrooptikelemente, die unterhalb der Wahrnehmung durch das menschliche Auge liegt, kann erreicht werden, dass überhaupt keine Strukturen erkennbar sind.

Insbesondere kann vorgesehen sein, dass zumindest einzelne Mikrooptikelemente pyramidenförmig ausgebildet sind, wobei benachbarte pyramidenförmige Mikrooptikelemente nahtlos nebeneinander liegend angeordnet sind.

Weiters kann vorgesehen sein, dass zumindest einzelne Mikrooptikelemente kegelförmig ausgebildet sind.

Grundsätzlich können diese Strukturformen auch mit einander vermengt werden. Vorzugsweise können alle Mikrooptikelemente pyramiden- oder kegelförmig ausgebildet sein.

Insbesondere kann vorgesehen sein, dass die Neigung der Reflexionsfläche oder Transmissionsfläche der Mikrooptik zwischen 0° und 45° beträgt, wobei das Maximum der Neigung vorzugsweise zwischen 40° und 45° beträgt. Im Falle von einer Neigung von 45° ist durch Doppelreflektion unter Beiziehung eins benachbarten Mikrooptikelements bereits eine Reflektion mit einem Winkel von 180° möglich.

Weiters kann vorgesehen sein, dass die Oberfläche gemäß Schritt a) lichtreflektierende Mikrooptikelemente aufweist, wobei die BSDF-Verteilung dergestalt gewählt ist, dass in dieser BSDF-Verteilungsfunktion zumindest ein lokales Maximum ausgebildet ist, welches einen benachbarten Wert, der um +5° oder -5° zu dem Winkelwert des lokalen Maximums versetzt ist, hinsichtlich der Höhe um zumindest 40% überschreitet.

Insbesondere kann vorgesehen sein, dass die Schritte d1) bis d5) iterativ wiederholt werden, wobei bei jeder Wiederholung ein zusätzlicher Teil der BSDF-Verteilung berücksichtigt wird.

Weiters kann vorgesehen sein, dass die Flächendiagonale der Grundfläche des Mikrooptikelements eine Länge zwischen 350nm und 2mm aufweist. Im Falle von Mikrooptikelementlängen unterhalb von 350nm müssten bereits Interferenzeffekte berücksichtigt werden.

Insbesondere kann vorgesehen sein, dass nach Schritt d4) eine Manipulation der optischen Erscheinung der Mikrooptikelemente erfolgt, indem die geometrische Form einzelner Mikrooptikelemente als Vorsprung und die geometrische Form anderer Mikrooptikelemente als Vertiefung ausgebildet wird. Dies wird z.B. durch Invertieren des Mikroptikelements erreicht (also der Ausbildung einer Vertiefung anstatt eines Vorsprungs; dadurch kann die Oberfläche noch unregelmäßiger aussehen).

Weiters kann vorgesehen sein, dass der optisch relevante Kraftfahrzeugbauteil eine optisch wirksame lichtstreuende Gesamtfläche aufweist, die aus optisch wirksamen lichtstreuenden Teilflächen zusammengesetzt sind, wobei jede optisch wirksame lichtstreuende Teilfläche eine vorgebbare BSDF-Verteilung und eine hierzu geeignete Auswahl an Mikrooptikelementen aufweist, die gemäß dem Verfahren nach einem der vorhergehenden Ansprüche berechnet wurden, wobei der Algorithmus zudem dazu eingerichtet ist, die BSDF-Verteilung aneinander grenzender Teilflächen zu berücksichtigen und die einzelne Mikrooptikelemente der benachbarten Teilflächen in dem Übergangsbereich der Teilflächen dergestalt auszuwählen und in dem Übergangsbereich zu gruppieren, sodass visuell (d.h. mit freiem Auge) erkennbare Unterschiede in der Verteilung der Mikrooptiken zwischen den benachbarten Teilflächen minimiert werden.

Insbesondere kann vorgesehen sein, dass die Mikrooptikelemente auf einem Kunststoffträger oder einem Glasträger ausgebildet sind, wobei die Mikrooptikelemente reflektierend ausgebildet sind, indem die Oberfläche des Kunststoff- oder Glasträgers mittels Aluminiumbedampfung reflektierend beschichtet wird.

Insbesondere kann vorgesehen sein, dass der Kunststoffträger aus Polycarbonat oder aus PMMA besteht.

Weiter ist ein nicht-beanspruchtes optisch relevantes Kraftfahrzeugbauteil hergestellt nach dem erfindungsgemäßen Verfahren vorgesehen.

Weiter ist ein nicht-beanspruchter Kraftfahrzeugscheinwerfer, umfassend das nicht-beanspruchte optisch relevante Kraftfahrzeugbauteil vorgesehen.

Alternativ oder ergänzend dazu kann es sich auch um eine Signallichtvorrichtung, insbesondere um einen Fahrtrichtungsanzeiger handeln.

Zudem ist ein nicht-beanspruchtes Kraftfahrzeug, umfassend das nicht-beanspruchte optisch relevante Kraftfahrzeugbauteil und/oder den nichtbeanspruchten Kraftfahrzeugscheinwerfer vorgesehen.

Anders ausgedrückt, können optionale Aspekte der Erfindung auch wie folgt beschrieben werden:
Auf die Oberfläche werden kleine Mikrooptiken gerechnet, die mit freiem Auge nicht oder kaum mehr aufzulösen sind. Hierbei wird ein Ansatz verwendet, der im Vergleich zu bisherigen Optiken unüblich ist bzw. noch nie zum Einsatz kam: Jede Optik ist einzigartig und eigenständig berechnet und hat ein unterschiedliches Verhalten als die anderen Optiken der Oberfläche. In Summe werden alle Optiken in einem gewissen Flächenbereich aber so berechnet, dass sie als Gesamtheit eine definierte BSDF-Verteilung (Streuverhalten) ergeben. Beim bisherigen Ansatz werden Optiken so gerechnet, dass jede Optik möglichst die ganze Lichtverteilung ab-bildet. Beim hier verwendeten stochastischen Ansatz macht jede Optik nur einen gezielt kleinen Teil der Lichtverteilung. Die Gesamtlichtverteilung ergibt sich dann aus der Summe der Einzeloptiken. Jede Optik unterscheidet sich damit in ihrer Form und ihrem Aussehen von den anderen Optiken, wodurch eine zufällige Variation der sichtbaren Oberflächentextur erzielt werden kann. Die Optiken werden zufällig auf den berechneten Bereich verteilt, sodass sich kein reguläres Muster auf der Oberfläche ausbildet und die Struktur im optischen Erscheinungsbild einer zufälligen Streustruktur oder Narbung entspricht. Für die lichttechnische Funktionalität ist unerheblich, ob die Optik als Erhebung oder Vertiefung ausgebildet ist. Über diese Variation (Invertierung) zufälliger Optiken hat man eine weitere Möglichkeit, um sichtbare Strukturen aufzubrechen.

Durch die Erfindung können folgende weitere Vorteile erzielt werden: 1) Eine scheinbar zufällige Oberflächenstrukturen bzw. Diffusorschichten können effektiv als lichttechnische Optikkomponente verwendet werden, wodurch auf Grund der gezielten Lichtnutzung eine höhere Effizienz des Systems erreicht werden kann. 2) Interessante, optische Effekte über Kombination und gezielte Nutzung benachbarter Optiken (z.B. retroreflektierende Narbungen, ...). 3) Es müssen keine diffraktiven Eigenschaften des Lichtes genutzt werden, um die gewünschten Effekte der Lichtbildformung zu erzielen (rein geometrische Optiken), wodurch einfachere und dadurch billigere Herstellungsverfahren verwendet werden können.

Die Erfindung ist im Folgenden anhand beispielhafter und nicht einschränkender Ausführungsform näher erläutert, die in den Figuren veranschaulicht ist. Darin zeigt
Fig. 1a eine schematische Darstellung eines Querschnitts von Mikrooptikelementen,
Fig.1b beispielshafte Lichtstrahlen, die auf ein Mikrooptikelement gemäß Fig. 1a auftreffen,
Fig. 1c eine beispielhafte Lichtintensitätsverteilung der Mikrooptikelemente nach Fig. 1a und 1b,
Fig. 2a eine schematische Darstellung eines Querschnitts eines Verbunds von unterschiedlichen Mikrooptikelementen,
Fig. 2b beispielshafte Lichtstrahlen, die auf ein Mikrooptikelement gemäß Fig. 2a auftreffen,
Fig. 2c eine beispielhafte Lichtintensitätsverteilung resultierend aus dem Verbund der Mikrooptikelemente nach Fig. 2a,
Fig. 3a eine schematische Darstellung eines Querschnitts eines Verbunds einer Vielzahl unterschiedlicher Mikrooptikelemente,
Fig. 3b eine beispielhafte Lichtintensitätsverteilung resultierend aus dem Verbund der Mikrooptikelemente nach Fig. 3a,
Fig. 4a eine schematische Darstellung eines Querschnitts eines Verbunds einer Vielzahl unterschiedlicher Mikrooptikelemente, die im Gegensatz zu Fig. 1a bis Fig. 3b nicht reflektierend, sondern lichtdurchlässig und damit lichtbrechend ausgebildet sind,
Fig. 4b eine beispielhafte Lichtintensitätsverteilung resultierend aus dem Verbund der Mikrooptikelemente nach Fig. 4a,
Fig. 5a eine beispielhafte durch gezielte Ausgestaltung und Anordnung der Mikrooptikelemente erzielbare Lichtintensitätsverteilung,
Fig. 5b und 5c jeweils einen Verbund unterschiedlicher Mikrooptikelemente, die zur Erzeugung unterschiedlicher Lichtintensitätsverteilungen herangezogen werden können,
Fig. 6a eine Oberfläche eines optisch relevanten Bauteils, die nach einem erfindungsgemäßen Verfahren berechnet und gestaltet wurde,
Fig. 6b bis 6h zweidimensionale Lichtintensitätsverteilungen der Fläche nach Fig. 6a für unterschiedliche Lichteinfallswinkel, und
Fig. 7 die einzelnen Schritte des erfindungsgemäßen Verfahrens in einem Blockschaltdiagramm.

In den folgenden Figuren bezeichnen - sofern nicht anders angegeben - gleiche Bezugszeichen gleiche Merkmale.

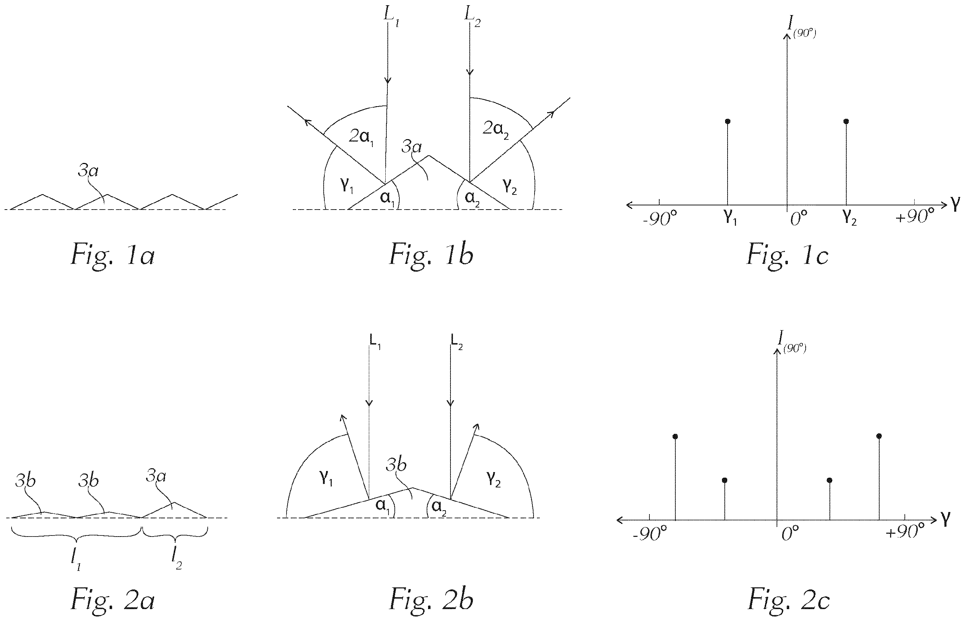

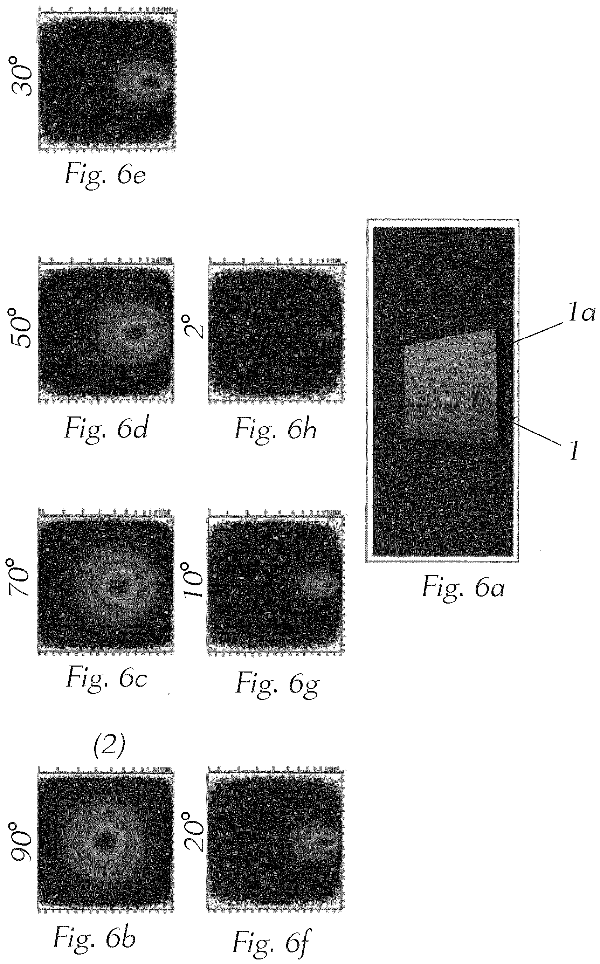

Fig. 1a zeigt eine schematische Darstellung eines Querschnitts von Mikrooptikelementen 3a. Die Mikrooptikelemente 3a sind an der Oberfläche eines optisch relevanten Kraftfahrzeugbauteils 1 (siehe Fig. 6a) angeordnet. Das Bauteil 1 gemäß Fig. 6a kann im Prinzip beliebige Maße aufweisen, beispielsweise können Länge und Breite zwischen wenigen Millimetern bis zu Metern variieren, das Bauteil 1 gemäß Abbildung 6a hat eine Länge und Breite zwischen jeweils 2 bis 3 cm. An der Oberfläche können daher z.B. mehrere tausend bis Mio. Mikrooptikelemente angeordnet sein, die - diese im vorliegenden Beispiel sehr klein sind - in der gezeigten Abbildung nicht einzeln erkennbar sind.

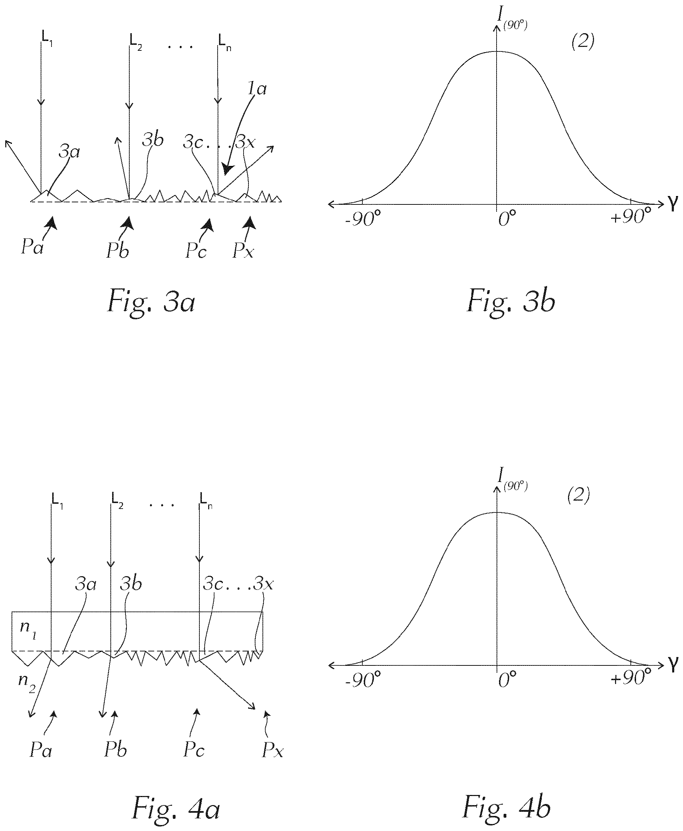

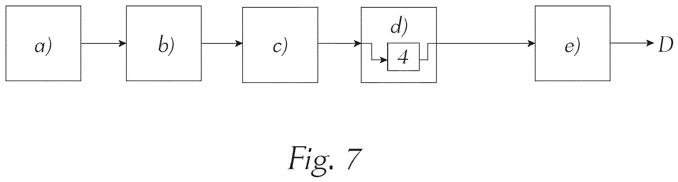

Die Erfindung betrifft ein Verfahren zur Berechnung eines optisch relevanten Kraftfahrzeugbauteils 1 (siehe Fig. 6) mit einer lichtstreuenden Oberfläche 1a, umfassend die folgenden Schritte:
a) Auswahl einer vorgebbaren BSDF-Verteilung 2 (siehe z.B. Fig. 3b, 4b, 5a, 6b bis 6h) der lichtstreuenden Oberfläche 1a des optischen relevanten Kraftfahrzeugbauteils 1, wobei die lichtstreuende Oberfläche 1a aus lichtstreuenden Mikrooptikelementen 3a, 3b, ...3x (siehe Fig. 3a) zusammengesetzt ist,
b) Auswahl der Information, ob die lichtstreuende Oberfläche 1a entweder ausschließlich reflektiv lichtstreuend wirkt, oder ob ein transmittierender Anteil vorhanden ist, wobei im Falle des Vorliegens eines transmittierenden Anteils zudem ein Schritt b1 folgt, wonach zur Berücksichtigung des Brechungsindex eine Auswahl eines Materials, aus dem die Oberfläche 1a zusammengesetzt ist, erfolgt,
c) Auswahl eines den Größenbereich der Mikrooptikelemente 3a, 3b, ...3x vorgebenden Parameters aus einem vorgebbaren Wahlbereich,
d) Berechnen von unterschiedlichen Formen von Mikrooptikelementen 3a, 3b, ...3x und derer Mengenverteilung gemäß einem Algorithmus 4 (siehe Fig. 7) zur Erzielung der gemäß Schritt a) ausgewählten BSDF-Verteilung unter Berücksichtigung der ausgewählten Größenbereichs gemäß Schritt c) sowie gegebenenfalls der optischen Eigenschaften des Materials gemäß Schritt b1), wobei die Oberfläche gemäß Schritt a) aus einer Vielzahl an nebeneinander flächig angeordneten Mikrooptikelementen 3a, 3b, ...3x zusammengesetzt ist, die aus dem Material gemäß Schritt c) bestehen, wobei der Algorithmus folgende Teilschritte umfasst:
   d1) Heranziehen zumindest eines Teils der BSDF-Verteilung (z.B. Verteilung bei Einfallswinkel 0°),
   d2) Aufteilen der Verteilung nach Schritt d1) in winkelabhängige Teilbereiche,
   d3) Berechnen der geometrischen Form der Reflexions- oder Transmissionsflächen von Mikrooptikelementen für jeden Teilbereich,
   d4) Bestimmen des mengenmäßigen Anteils der Mikrooptikelemente für jeden Teilbereich in Abhängigkeit von dem Wert der Verteilungsfunktion für den Teilbereich,
   d5) randomisierte Verteilung Pa, Pb, ...Px der gemäß Schritt d4) bestimmten Mikrooptikelemente 3a, 3b, ...3x auf die Oberfläche 1a des optisch relevanten Kraftfahrzeugbauteils 1,
e) Ausgabe des Berechnungsergebnisses gemäß Schritt d) in Form digitaler Daten D (siehe Fig. 7).

Fig. 1b zeigt beispielshafte Lichtstrahlen L₁ und L₂, die auf ein Mikrooptikelement 3a gemäß Fig. 1a auftreffen und reflektiert werden. Diese Lichtstrahlen fallen z.B. in einem Einfallswinkel von 90° ein und. Der Lichtstrahl L₁ trifft auf eine geneigte Fläche des Mikrooptikelements 3a (die Neigung beträgt α₁ = 25°). Dieser Lichtstrahl wird mit einem Winkel in Höhe von 2x α₁, also 50°, gemessen zur senkrechten Einfallsrichtung reflektiert. Die horizontale strichlierte Linie soll dabei den im Wesentlichen geraden Verlauf der Reflexionsfläche 1a zeigen, der nur durch die Unebenheiten der zahlreichen Mikrooptiken von einem exakt geraden Verlauf abweicht. In Bezug auf die Fläche 1a ist der reflektierte Lichtstrahl mit einem Winkel γ₁ = 90°- 2 x α₁ = 40° geneigt. Der Lichtstrahl L₂ wird in analoger Weise reflektiert. In diesem Fall stimmen die zugehörigen Winkel zu L₁ aufgrund des symmetrischen Aufbaus des Mikrooptikelements 3a grundsätzlich überein, außer dass der Lichtstrahl L₂ nach rechts und nicht nach links abgelenkt wird. Es könnte aber auch eine asymmetrische Geometrie vorgesehen sein.

Fig. 1c zeigt das Reflexionsverhalten der Mikrooptik 3a. Fig. 1c eine beispielhafte Lichtintensitätsverteilung (d.h. einen Ausschnitt aus einer BSDF-Verteilung - nämlich für einen Einfallswinkel 90°) der Mikrooptikelemente 3a nach Fig. 1a und 1b.

Fig. 2a zeigt eine schematische Darstellung eines Querschnitts eines Verbunds von unterschiedlichen Mikrooptikelementen 3a und 3b. Fig. 2b zeigt beispielshafte Lichtstrahlen, die auf ein Mikrooptikelement 3b gemäß Fig. 2a auftreffen. Dieses Mikrooptikelement 3b ist beispielsweise flacher mit einem Winkel in Höhe von α₁= α₂ = 10° ausgebildet. Draus resultieren Reflexionswinkel γ₁ = γ₂ = 70°. Die Längen 1₁ und 1₂ in Fig. 2a repräsentierten den flächenmäßigen Anteil der Mikrooptikelemente 3a und 3b an der Oberfläche 1a, vorliegend im Verhältnis 1₁ = 2 x 1₂. Unter der Annahme, dass die Oberfläche 1a nur aus den beiden Mikrooptikelementen 3a und 3b besteht, und diese im Flächenverhältnis 2:1 verteilt sind, ergäbe sich eine beispielhafte Lichtintensitätsverteilung des reflektierten Lichts gemäß Fig. 2c, wobei das Licht dabei unter einem Winkel von 90° auf die Oberfläche 1a einfällt. Darin wäre die Intensität des Lichtes, das in einem Winkel in Höhe von +/- 40° reflektiert wird, halb so stark wie die Intensität des Lichts, das mit einem Winkel in Höhe von +/- 70° reflektiert wird.

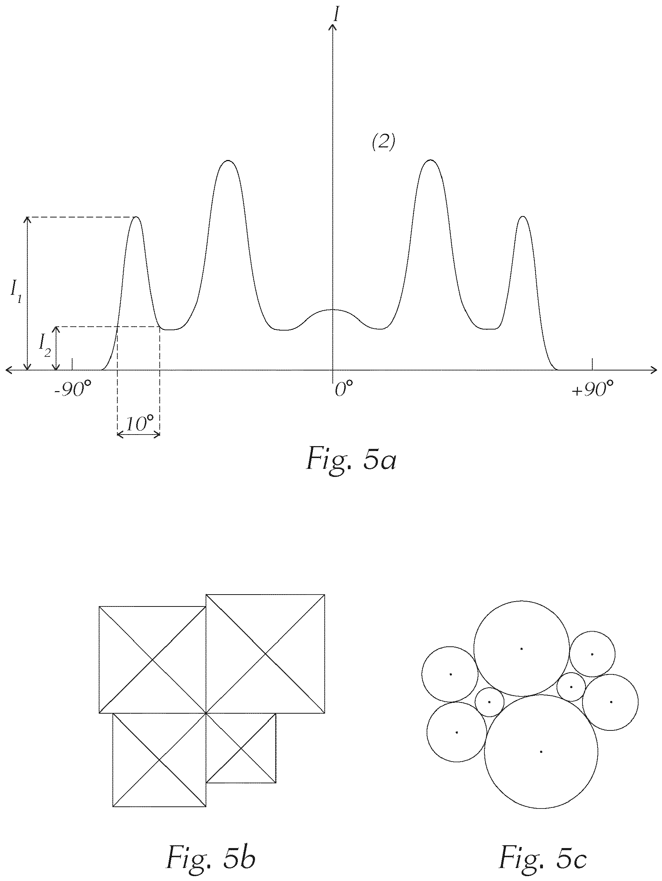

Die in Figuren 1a bis 2c betreffenden Mikrooptikelemente haben eine pyramidenform, wobei benachbarte pyramidenförmige Mikrooptikelemente nahtlos nebeneinander liegend angeordnet sind. Alternativ dazu könnten auch einzelne Mikrooptikelemente kegelförmig ausgebildet sein (siehe Fig. 5c).

Fig. 3a zeigt eine schematische Darstellung eines Querschnitts eines Verbunds einer Vielzahl unterschiedlicher Mikrooptikelemente 3a bis 3x, die zu einer Oberfläche 1a zusammengesetzt sind. Fig. 3b zeigt hierzu eine beispielhafte Lichtintensitätsverteilung resultierend aus dem Verbund der Mikrooptikelemente 3a bis 3x nach Fig. 3a. Es handelt sich dabei z.B. um eine Normalverteilung.

Fig. 4a zeigt eine schematische Darstellung eines Querschnitts eines Verbunds einer Vielzahl unterschiedlicher Mikrooptikelemente 3a' bis 3x', die im Gegensatz zu Fig. 1a bis Fig. 3b sind diese Mikrooptikelemente 3a' bis 3x'nicht reflektierend, sondern lichtdurchlässig und damit lichtbrechend ausgebildet. Die bereits im Zusammenhang mit Fig. 1a bis Fig. 3b beschriebenen Reflexionseffekte und Winkel können grundsätzlich in analoger Weise durch Lichtbrechung realisiert werden. Fig. 4b zeigt eine beispielhafte Lichtintensitätsverteilung resultierend aus dem Verbund der Mikrooptikelemente 3a' bis 3x' nach Fig. 4a,

Fig. 5a zeigt eine beispielhafte durch gezielte Ausgestaltung und Anordnung der Mikrooptikelemente erzielbare Lichtintensitätsverteilung. Darin ist z.B. eine Verteilung für einen Einfallswinkel 90° gezeigt, bei die Oberfläche 1a und folglich die BSDF-Verteilung dergestalt gewählt ist, dass in dieser BSDF-Verteilungsfunktion zumindest ein lokales Maximum I₁ ausgebildet ist, welches einen benachbarten Wert I₂, der um +5° oder -5° zu dem Winkelwert des lokalen Maximums versetzt ist, hinsichtlich der Höhe um zumindest 40% überschreitet. Im vorliegenden Beispiel wird dieser Wert I₂ um über 100% überschritten. Durch eine Verteilung im Sinne von Fig. 5a kann eine Richtwirkung der Reflexion oder Transmission erzielt werde, wobei jedes lokale Maximum einer Richtwirkung entspricht. Die Verteilung gemäß Fig. 5a weist z.B. vier stark ausgeprägte Maxima (bei ca. +/- 40° und +/-70°) sowie ein schwächer ausgeprägtes Maximum bei 0° auf.

Fig. 5b und 5c zeigen jeweils beispielhaft einen Verbund unterschiedlicher Mikrooptikelemente, die zur Erzeugung unterschiedlicher Lichtintensitätsverteilungen herangezogen werden können.

Fig. 6a zeigt ein optisch relevantes Bauteil 1 umfassend eine Oberfläche 1a, die nach einem erfindungsgemäßen Verfahren berechnet und gestaltet wurde. Fig. 6b bis 6h zeigen zweidimensionale Lichtintensitätsverteilungen der Fläche nach Fig. 6a für unterschiedliche Lichteinfallswinkel - woraus eine BSDF-Verteilung abgeleitet werden kann.

Fig. 7 zeigt die einzelnen Schritte des erfindungsgemäßen Verfahrens in einem Blockschaltdiagramm.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden.

Etwaige Bezugszeichen in den Ansprüchen sind beispielhaft und dienen nur der einfacheren Lesbarkeit der Ansprüche, ohne diese einzuschränken.

## Patentansprüche

1. Verfahren zur Berechnung eines optisch relevanten Kraftfahrzeugbauteils (1) mit einer lichtstreuenden Oberfläche (1a), umfassend die folgenden Schritte:
a) Auswahl einer vorgebbaren BSDF-Verteilung (2) der lichtstreuenden Oberfläche (1a) des optischen relevanten Kraftfahrzeugbauteils (1), wobei die lichtstreuende Oberfläche (1a) aus lichtstreuenden Mikrooptikelementen (3a, 3b, ...3x') zusammengesetzt ist,
b) Auswahl der Information, ob die lichtstreuende Oberfläche (1a) entweder ausschließlich reflektiv lichtstreuend wirkt, oder ob ein transmittierender Anteil vorhanden ist, wobei im Falle des Vorliegens eines transmittierenden Anteils zudem ein Schritt b1) folgt, wonach zur Berücksichtigung des Brechungsindex eine Auswahl eines Materials, aus dem die Oberfläche (1a) zusammengesetzt ist, erfolgt,
c) Auswahl eines den Größenbereich der Mikrooptikelemente (3a, 3b, ...3x) vorgebenden Parameters aus einem vorgebbaren Wahlbereich,
d) Berechnen von unterschiedlichen Formen von Mikrooptikelementen (3a, 3b, ...3x') und derer Mengenverteilung gemäß einem Algorithmus (4) zur Erzielung der gemäß Schritt a) ausgewählten BSDF-Verteilung unter Berücksichtigung der ausgewählten Größenbereichs gemäß Schritt c) sowie gegebenenfalls der optischen Eigenschaften des Materials gemäß Schritt b1), wobei die Oberfläche gemäß Schritt a) aus einer Vielzahl an nebeneinander flächig angeordneten Mikrooptikelementen (3a, 3b, ...3x') zusammengesetzt ist, die aus dem Material gemäß Schritt c) bestehen, wobei der Algorithmus folgende Teilschritte umfasst:
d1) Heranziehen zumindest eines Teils (I(90°)) der BSDF-Verteilung (2),
d2) Aufteilen der Verteilung nach Schritt d1) in winkelabhängige Teilbereiche,
d3) Berechnen der geometrischen Form der Reflexions- oder Transmissionsflächen von Mikrooptikelementen (3a, 3b, ...3x') für jeden Teilbereich,
d4) Bestimmen des mengenmäßigen Anteils der Mikrooptikelemente (3a, 3b, ...3x') für jeden Teilbereich in Abhängigkeit von dem Wert der Verteilungsfunktion für den Teilbereich,
d5) randomisierte Verteilung (Pa, Pb, ...Px) der gemäß Schritt d4) bestimmten Mikrooptikelemente (3a, 3b, ...3x') auf die Oberfläche (1a) des optisch relevanten Kraftfahrzeugbauteils (1),
e) Ausgabe des Berechnungsergebnisses gemäß Schritt d) in Form digitaler Daten (D).

2. Verfahren nach Anspruch 1, wobei zumindest einzelne Mikrooptikelemente pyramidenförmig ausgebildet sind, wobei benachbarte pyramidenförmige Mikrooptikelemente nahtlos nebeneinander liegend angeordnet sind.

3. Verfahren nach Anspruch 2, wobei zumindest einzelne Mikrooptikelemente kegelförmig ausgebildet sind.

4. Verfahren nach Anspruch 2 oder 3, wobei die Neigung der Reflexionsfläche oder Transmissionsfläche der Mikrooptikelemente (3a', 3b', ...3x') zwischen 0° und 45° beträgt, wobei das Maximum der Neigung vorzugsweise zwischen 40° und 45° beträgt.

5. Verfahren nach einem der vorhergehenden Ansprüche, wobei die Oberfläche (1a) gemäß Schritt a) lichtreflektierende Mikrooptikelemente (3a, 3b, ...3x) aufweist, wobei die BSDF-Verteilung dergestalt gewählt ist, dass in dieser BSDF-Verteilungsfunktion zumindest ein lokales Maximum (I₁) ausgebildet ist, welches einen benachbarten Wert (I₂), der um +5° oder -5° zu dem Winkelwert des lokalen Maximums versetzt ist, hinsichtlich der Höhe um zumindest 40% überschreitet.

6. Verfahren nach einem der vorhergehenden Ansprüche, wobei die Schritte d1) bis d5) iterativ wiederholt werden, wobei bei jeder Wiederholung ein zusätzlicher Teil der BSDF-Verteilung berücksichtigt wird.

7. Verfahren nach einem der vorhergehenden Ansprüche, wobei die Flächendiagonale der Grundfläche des Mikrooptikelements (3a, 3b, ...3x') eine Länge zwischen 350nm und 2mm aufweist.

8. Verfahren nach einem der vorhergehenden Ansprüche, wobei nach Schritt d4) eine Manipulation der optischen Erscheinung der Mikrooptikelemente (3a, 3b, ...3x') erfolgt, indem die geometrische Form einzelner Mikrooptikelemente (3a, 3b, ... 3x') als Vorsprung und die geometrische Form anderer Mikrooptikelemente als Vertiefung ausgebildet wird.

9. Verfahren nach einem der vorhergehenden Ansprüche, wobei der optisch relevante Kraftfahrzeugbauteil (1) eine optisch wirksame lichtstreuende Gesamtfläche (1a) aufweist, die aus optisch wirksamen lichtstreuenden Teilflächen zusammengesetzt sind, wobei jede optisch wirksame lichtstreuende Teilfläche eine vorgebbare BSDF-Verteilung und eine hierzu geeignete Auswahl an Mikrooptikelementen (3a, 3b, ...3x') aufweist, die gemäß dem Verfahren nach einem der vorhergehenden Ansprüche berechnet wurden, wobei der Algorithmus (4) zudem dazu eingerichtet ist, die BSDF-Verteilung aneinander grenzender Teilflächen zu berücksichtigen und die einzelne Mikrooptikelemente (3a, 3b, ...3x') der benachbarten Teilflächen in dem Übergangsbereich der Teilflächen dergestalt auszuwählen und in dem Übergangsbereich zu gruppieren, sodass visuell erkennbare Unterschiede in der Verteilung der Mikrooptiken (3a, 3b, ...3x') zwischen den benachbarten Teilflächen minimiert werden.

10. Verfahren nach einem der vorhergehenden Ansprüche, umfassend einen zusätzlichen Schritt f):
f) Herstellung eines optisch relevanten Kraftfahrzeugbauteils (1) mit einer lichtstreuenden Oberfläche (1a) umfassend eine Verteilung der Mikrooptikelemente (3a, 3b, ... 3x') angeordnet gemäß den Berechnungsergebnis bzw. den Daten gemäß Schritt e).

11. Verfahren nach Anspruch 10, wobei die Mikrooptikelemente (3a, 3b, ...3x) auf einem Kunststoffträger oder einem Glasträger ausgebildet sind, wobei die Mikrooptikelemente (3a, 3b, ...3x) reflektierend ausgebildet sind, indem die Oberfläche des Kunststoff- oder Glasträgers mittels Aluminiumbedampfung reflektierend beschichtet wird.

12. Verfahren nach Anspruch 11, wobei der Kunststoffträger aus Polycarbonat oder aus PMMA besteht.

## Claims

1. Method for calculating an optically relevant motor vehicle component (1) having a light-scattering surface (1a), comprising the following steps:
a) selecting a predeterminable BSDF distribution (2) of the light-scattering surface (1a) of the optically relevant motor vehicle component (1), the light-scattering surface (1a) being composed of light-scattering micro-optical elements (3a, 3b, ...3x'),
b) selecting the information as to whether the light-scattering surface (1a) has either an exclusively reflective light-scattering effect or whether a transmitting component is present, wherein in the case of the presence of a transmitting component a step b1) also follows, according to which a material from which the surface (1a) is composed is selected in order to take the refractive index into account,
c) selecting a parameter specifying the size range of the micro-optical elements (3a, 3b, ...3x) from a predeterminable selection range,
d) calculating different shapes of micro-optical elements (3a, 3b, ...3x') and their quantity distribution according to an algorithm (4) to obtain the BSDF distribution selected according to step a), taking into account the selected size range according to step c) and, if appropriate, the optical properties of the material according to step b1), the surface according to step a) being composed of a plurality of micro-optical elements (3a, 3b, ... 3x') which are composed of the material according to step c), wherein the algorithm comprises the following substeps:
d1) drawing at least a part (I(90°)) of the BSDF distribution (2),
d2) dividing the distribution according to step d1) into angle-dependent subregions,
d3) calculating the geometric shape of the reflection or transmission surfaces of micro-optical elements (3a, 3b, ...3x') for each sub-region,
d4) determining the quantitative proportion of micro-optical elements (3a, 3b, ...3x') for each sub-region as a function of the value of the distribution function for the sub-region,
d5) randomized distribution (Pa, Pb, ...Px) of the micro-optical elements (3a, 3b, ...3x') determined according to step d4) on the surface (1a) of the optically relevant motor vehicle component (1),
e) outputting the calculation result according to step d) in the form of digital data (D).

2. Method according to claim 1, wherein at least individual micro-optical elements are pyramid-shaped, wherein adjacent pyramid-shaped micro-optical elements are arranged seamlessly next to each other.

3. Method according to claim 2, wherein at least individual micro-optical elements are conical in shape.

4. Method according to claim 2 or 3, wherein the inclination of the reflection surface or transmission surface of the micro-optical elements (3a', 3b', ...3x') is between 0° and 45°, wherein the maximum of the inclination is preferably between 40° and 45°.

5. Method according to one of the preceding claims, wherein the surface (1a) according to step a) comprises light-reflecting micro-optical elements (3a, 3b, ...3x), wherein the BSDF distribution is selected in such a way that in this BSDF distribution function at least one local maximum (11) is formed which exceeds a neighboring value (12), which is offset by +5° or -5° with respect to the angular value of the local maximum, by at least 40% in terms of height.

6. Method according to one of the preceding claims, wherein the steps d1) to d5) are repeated iteratively, wherein an additional part of the BSDF distribution is taken into account in each repetition.

7. Method according to one of the preceding claims, wherein the surface diagonal of the base surface of the micro-optical element (3a, 3b, ...3x') has a length between 350nm and 2mm.

8. Method according to one of the preceding claims, wherein after step d4) the optical appearance of the micro-optical elements (3a, 3b, ...3x') is manipulated in that the geometric shape of individual micro-optical elements (3a, 3b, ...3x') is formed as a protrusion and the geometric shape of other micro-optical elements is formed as a depression.

9. Method according to one of the preceding claims, wherein the optically relevant motor vehicle component (1) has an optically effective light-scattering overall surface (1a) which is composed of optically effective light-scattering partial surfaces, wherein each optically effective light-scattering partial surface has a predeterminable BSDF distribution and a selection of micro-optical elements (3a, 3b, ... 3x') which have been calculated according to the method according to one of the preceding claims, wherein the algorithm (4) is also set up to take into account the BSDF distribution of adjacent partial surfaces and to select the individual micro-optical elements (3a, 3b, ...3x') of the adjacent partial surfaces in the transition region of the partial surfaces and to group them in the transition region in such a way that visually recognizable differences in the distribution of the micro-optics (3a, 3b, ...3x') between the adjacent partial surfaces are minimized.

10. Method according to one of the preceding claims, comprising an additional step f):
(f) producing an optically relevant motor vehicle component (1) having a light-scattering surface (1a) comprising a distribution of the micro-optical elements (3a, 3b, ...3x') arranged according to the calculation result or the data according to step e).

11. Method according to claim 10, wherein the micro-optical elements (3a, 3b, ...3x) are formed on a plastic carrier or a glass carrier, wherein the micro-optical elements (3a, 3b, ...3x) are formed reflectively by coating the surface of the plastic or glass carrier reflectively by means of aluminum evaporation.

12. Method according to claim 11, wherein the plastic carrier consists of polycarbonate or PMMA.

## Revendications

1. Procédé de calcul d'un composant automobile optiquement pertinent (1) avec une surface diffusant la lumière (1a), comprenant les étapes suivantes :
a) Sélection d'une répartition BSDF (2) pouvant être prédéfinie de la surface diffusant la lumière (1a) du composant automobile optiquement pertinent (1), la surface diffusant la lumière (1a) étant composée d'éléments micro-optiques diffusant la lumière (3a, 3b, ...3x'),
b) sélection de l'information selon laquelle la surface (1a) diffusant la lumière a un effet de diffusion de la lumière soit exclusivement par réflexion, soit s'il existe une partie transmettant la lumière, dans le cas de la présence d'une partie transmettant la lumière, il s'ensuit en outre une étape b1) selon laquelle, pour tenir compte de l'indice de réfraction, il est procédé à une sélection d'un matériau dont est composée la surface (1a),
c) sélection d'un paramètre définissant la plage de dimensions des éléments micro-optiques (3a, 3b, ...3x) à partir d'une plage de sélection pouvant être prédéfinie,
d) calculer différentes formes d'éléments micro-optiques (3a, 3b, ... 3x') et leur répartition quantitative selon un algorithme (4) pour obtenir la répartition BSDF sélectionnée selon l'étape a) en tenant compte de la plage de tailles sélectionnée selon l'étape c) ainsi que, le cas échéant, des propriétés optiques du matériau selon l'étape b1), la surface selon l'étape a) étant constituée d'une pluralité d'éléments micro-optiques (3a, 3b, ... 3x') disposés à plat les uns à côté des autres qui sont constitués du matériau selon l'étape c), l'algorithme comprenant les étapes partielles suivantes :
d1) utilisation d'au moins une partie (I(90°)) de la distribution BSDF (2),
d2) diviser la distribution selon l'étape d1) en zones partielles dépendant de l'angle,
d3) calculer la forme géométrique des surfaces de réflexion ou de transmission des micro-éléments optiques (3a, 3b, ...3x') pour chaque zone partielle,
d4) détermination de la proportion quantitative des éléments micro-optiques (3a, 3b, ...3x') pour chaque zone partielle en fonction de la valeur de la fonction de distribution pour la zone partielle,
d5) répartition randomisée (Pa, Pb, ...Px) des éléments micro-optiques (3a, 3b, ...3x') déterminés selon l'étape d4) sur la surface (1a) du composant automobile optiquement pertinent (1),
e) sortie du résultat du calcul selon l'étape d) sous forme de données numériques (D).

2. Procédé selon la revendication 1, dans lequel au moins certains éléments micro-optiques sont réalisés en forme de pyramide, des éléments micro-optiques voisins en forme de pyramide étant disposés côte à côte sans soudure.

3. Procédé selon la revendication 2, dans lequel au moins certains éléments micro-optiques sont de forme conique.

4. Procédé selon la revendication 2 ou 3, dans lequel l'inclinaison de la surface de réflexion ou de la surface de transmission des éléments micro-optiques (3a', 3b', ...3x') est comprise entre 0° et 45°, le maximum de l'inclinaison étant de préférence compris entre 40° et 45°.

5. Procédé selon l'une quelconque des revendications précédentes, dans lequel la surface (1a) selon l'étape a) comprend des éléments micro-optiques (3a, 3b, ...3x) réfléchissant la lumière, la distribution BSDF étant choisie de telle sorte que, dans cette fonction de distribution BSDF, il est formé au moins un maximum local (I1) dépassant en hauteur d'au moins 40% une valeur adjacente (12) décalée de +5° ou -5° par rapport à la valeur angulaire du maximum local.

6. Procédé selon l'une quelconque des revendications précédentes, dans lequel les étapes d1) à d5) sont répétées de manière itérative, une partie supplémentaire de la distribution BSDF étant prise en compte à chaque répétition.

7. Procédé selon l'une quelconque des revendications précédentes, dans lequel la diagonale de la surface de base de l'élément micro-optique (3a, 3b, ...3x') a une longueur comprise entre 350nm et 2mm.

8. Procédé selon l'une quelconque des revendications précédentes, dans lequel, après l'étape d4), on procède à une manipulation de l'apparence optique des éléments micro-optiques (3a, 3b, ...3x') en réalisant la forme géométrique de certains éléments micro-optiques (3a, 3b, ...3x') sous forme de saillie et la forme géométrique d'autres éléments micro-optiques sous forme de creux.

9. Procédé selon l'une des revendications précédentes, dans lequel le composant automobile optiquement pertinent (1) présente une surface totale optiquement efficace de diffusion de la lumière (1a) qui est composée de surfaces partielles optiquement efficaces de diffusion de la lumière, chaque surface partielle optiquement efficace de diffusion de la lumière présentant une répartition BSDF prédéfinissable et une sélection appropriée à cet effet d'éléments micro-optiques (3a, 3b, .... 3x') calculés selon le procédé selon l'une des revendications précédentes, l'algorithme (4) étant en outre agencé pour prendre en compte la répartition BSDF de sous-surfaces adjacentes et pour sélectionner les éléments micro-optiques individuels (3a, 3b, ...3x') des sous-surfaces adjacentes dans la zone de transition des sous-surfaces et pour les regrouper dans la zone de transition de telle sorte que les différences visuellement reconnaissables dans la répartition des micro-optiques (3a, 3b, ...3x') entre les sous-surfaces adjacentes soient minimisées.

10. Procédé selon l'une quelconque des revendications précédentes, comprenant une étape supplémentaire f) :
f) fabrication d'un composant automobile optiquement pertinent (1) avec une surface (1a) diffusant la lumière comprenant une répartition des éléments micro-optiques (3a, 3b, ...3x') disposés selon le résultat du calcul ou les données de l'étape e).

11. Procédé selon la revendication 10, dans lequel les éléments micro-optiques (3a, 3b, ...3x) sont formés sur un support en plastique ou un support en verre, dans lequel les éléments micro-optiques (3a, 3b, ...3x) sont formés de manière réfléchissante en revêtant de manière réfléchissante la surface du support en plastique ou en verre au moyen d'une évaporation d'aluminium.

12. Procédé selon la revendication 11, dans lequel le support en matière plastique est constitué de polycarbonate ou de PMMA.
